# EUROPEAN PATENT APPLICATION

(11) **EP 2 080 452 A1**
(43) Date of publication of application: **22.07.2009**
(21) Application number: 08152306.0
(22) Date of filing: 05.03.2008
(51) Int. Cl.: A47C 20/04, A61G 7/018

(54) **An electric linear actuator**

(30) Priority: 17.01.2008 CN 200810059294
(71) Applicant: Zhejiang Xinyi Control System Co. Ltd, Zhejiang Province Shangyu City, Zhejiang 312-352 (CN)
(72) Inventor: Danyang, Zhang, 312352 Shangyu City DeJiYuan Xinjiang 601-5 (CN)
(74) Representative: Ketelaars, Maarten F.J.M.

(57) **Abstract**

The present invention relates to a kind of electric linear actuator, which comprises a housing (1), a reversible electromotor (2), a worm (3), a worm gear (4) and a screw (5). The worm gear (4) can only rotate freely in the housing (1), and the screw (5) has a limiting block (6) and a pushing block (7) separately on its two ends, while the screw (5) goes through the center shaft of the worm gear (4) and goes into mesh with the center hole of the worm gear (4). Moreover, the housing (1) has a sliding groove (13) in which the limiting block (6) can glide along. Compared with the prior art, this present invention transforms rotational output of the electromotor into linear movement and can push the rocker on the supporting device of the bedstead to make the end of the bedstead rise up or fall down. Further more, the components of the linear actuator is few, the structure is more compact, the size is smaller, and in the actual application, due to the linear actuator is independent of the structure of the bedstead, the linear actuator of the present invention make the manufacture, assembling and the maintenance very easy.

## Description

### Field of the Invention

The present invention relates to the field of the actuator device, in particular, to a kind of electric linear actuator who can transform rotational output of the electromotor into linear movement.

### Description of the Prior Art

At present, one or two ends of the bed using in the hospital and house, can be risen up and fallen down to adjust the angle of bending of the bed, in order to make the lying on the bed more comfortable or provide special service for medical treatment. It requires a kind of an actuator be set at the bottom of the bed, such as the Chinese patent No. ZL02237921.5 titled "Auto Rising and Falling Electric Bed" disclosed. The actuator device comprises a restrictive bracket set on the beam of the bedstead, a shaft which is driven by the electromotor and fixed between the carlings of the bedstead, a rocker jointed on the shaft and a movable joint block. The back board of the bedstead joints with the bedstead through the fixed shaft and can rise and fall round the fixed shaft. A slot-shaped board is jointed on the back board, the pulley on the end of the rocker is set in the slot-shaped track of the slot-shaped board, and the reversible electromotor is set on the bracket of the bedstead and joints with the movable joint block through a nut sleeve for the screw. In the actuator, the nut sleeve for the screw impels the shaft driven by the electromotor through the electromotor, and then makes the back board of the bedstead rise up by working with the restrictive bracket and the rocker, inversely makes the board of the bedstead fall down. Because the actuator must closely and directly joint with the girder of the bedstead, the structure of the bedstead should be fit for the actuator, and it will make the manufacture of the bedstead more difficult. Furthermore, because there are too many components in the whole actuator, it makes the bulk of the device huge, and it is not benefit for the manufacture of the device, and will take trouble to the maintenance of the device. In the meanwhile, because the movement and the range of the revolution of the nut sleeve for the screw are large, the shaft driven by the electromotor and other transmission is quite big, the working noise will be quite big and evidently reduce the comfort of using the actuator.

### Summary of the invention

It is an object of the present invention to provide an electric linear actuator, the structure of which is more compact, the size of which is smaller, and which will make the manufacture and maintenance more easily and which has no working noise. The electric linear actuator of present invention can transform rotational output of the electromotor into linear movement, then can drive the transmission on the end of the bedstead, to make the end of the bedstead rise up or fall down.

For achieving this object, the electric linear actuator comprises a housing and the components which are set in the housing list as below:
a reversible electromotor;
a worm which can rotate driven by the output shaft of the electromotor;
a worm gear, which is engaged with the worm, and which can only rotate freely in the housing;
a screw, who has a limiting block and a pushing block separately on its two ends, and who goes through the center shaft of the worm gear and goes into mesh with the center hole of the worm gear;
wherein the housing has a sliding groove in which the limiting block can glide along.

Due to the worm gear is limited in the housing, the worm gear cannot move relatively to the housing and can only rotate relatively to the housing. In the meanwhile, although the worm gear can rotate relatively to the screw which goes into mesh with the center hole of the worm gear, but the limiting block on the end of the screw can only move along the sliding groove in the housing and cannot rotate relatively to the housing, accordingly, the screw can only move linearly along the sliding groove in the housing. That is, when the electromotor is working, the worm will make the worm gear rotate in the housing, and the screw will move linearly and limitedly along the sliding groove in the housing together with the limiting block and the pushing block driven by the worm gear.

When applying practically, the pushing block can push the rocker on the supporting device of the bedstead and the supporting shaft which support the end of the bedstead and other transmission, then the end of the bedstead rise up or fall down .

The manner of the worm gear which can only rotate freely in the housing can adopt various existing techniques, but simply, the manner can be as follows: the worm gear has a left bearing and a right bearing on its two sides, and the housing has a left groove and a right groove to separately contain the left bearing and the right bearing. Thus, the left and right bearings are locked in their corresponding grooves and make the worm gear cannot move relatively to the housing, and the left and right bearings can assure the worm gear rotate freely relatively to the housing.

Although the movement of the screw can limited by the limiting block and the pushing block on its two ends, but if the electromotor is still working when the screw moves to the left limited position or the right limited position, it will damage the components or even bum the electromotor itself. So the housing should better have a switch or switches which can control the electromotor to stop working. The electromotor and other components will be protected by the switches.

The switches can adopt various existing techniques, for example, use Hall element or reed switch in electromagnetism type, or use the jiggle switches in mechanism type. But in order to make the manufacture more easy, the switches can be the stop-falling touching switch and stop-rising touching switch which are separately set alongside the sliding groove of the housing and can separately touch the limiting block. Therefore, when the limiting block moves linearly and limitedly, its sidewall can touch the stop-rising touching switch and stop-falling touching switch, and make the electromotor stop working, having the effect of protecting the components and electromotor.

The housing can even have a circuit board which can control the electromotor to work, and the stop-rising touching switch and the stop-falling touching switch connect to the circuit board. Through the design of the circuit board, it can realize not only the manually control of the electromotor, but also the long-distance control of the electromotor, in the actual application, that is to control the height of rising or falling of the bedstead.

Compared with the prior art, in this present invention, the electromotor drives the worm and the worm gear to rotate, but as the screw cannot rotate relatively to the housing, the rotating worm gear can make the screw move linearly along the sliding groove in the housing, therefore it transform rotational output of the electromotor into linear movement. In actual application, the pushing block on the end of the screw can push the rocker on the supporting device of the bedstead to make the end of the bedstead rise up or fall down. Further more, the components of the linear actuator of the present invention is few, the structure is more compact, the size is smaller, and in the actual application, due to the linear actuator is independent of the structure of the bedstead, the linear actuator of the present invention make the manufacture, assembling, and the maintenance very easy. At the same time, in this present invention, the range of movement is comparatively little, and no working noise is made. Additionally, the end of the bedstead rises up driven by the electric linear actuator and is supported by the screw and the worm gear, it will debase the requirement to the material of the push block and other components and reduce the cost of the manufacture.

### Brief description of the drawings

FIG.1 is a perspective view of the electric linear actuator of an embodiment of the present invention.
FIG.2 is the perspective view of FIG.1 when the screw moves to the falling down limited position (the upper-housing and the jointing circuitry are removed).
FIG.3 is the perspective view of FIG.1 when the screw moves to the rising up limited position (the upper-housing and the jointing circuitry are removed).
FIG.4 is the top plan view of FIG.2.

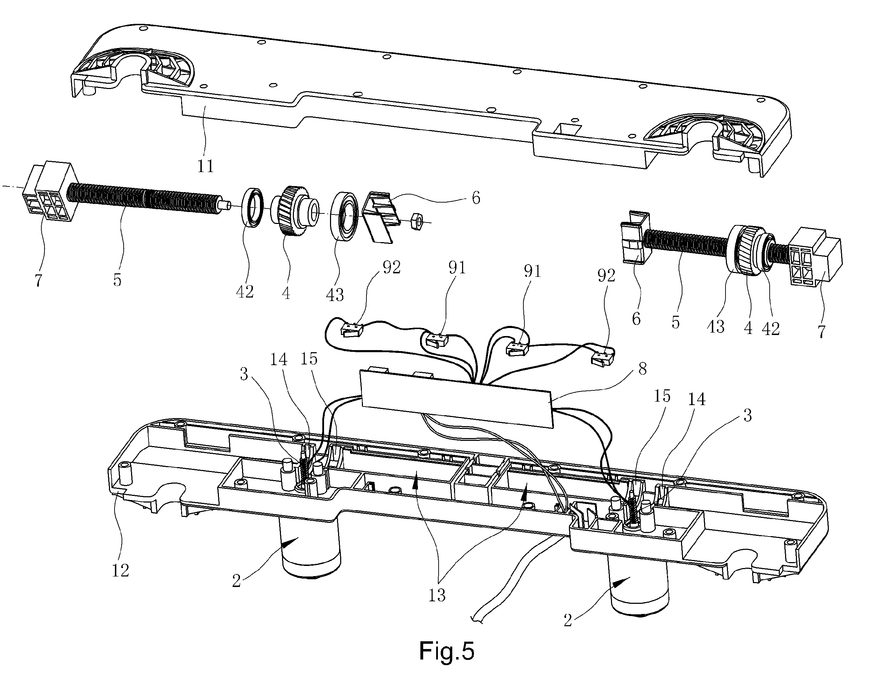

FIG.5 is an exploded perspective view of FIG.1 .

### Detailed description of the preferred embodiment

To enable a further understanding of the innovative and technological content of the invention herein, refer to the detailed description of the invention and the accompanying drawings below:

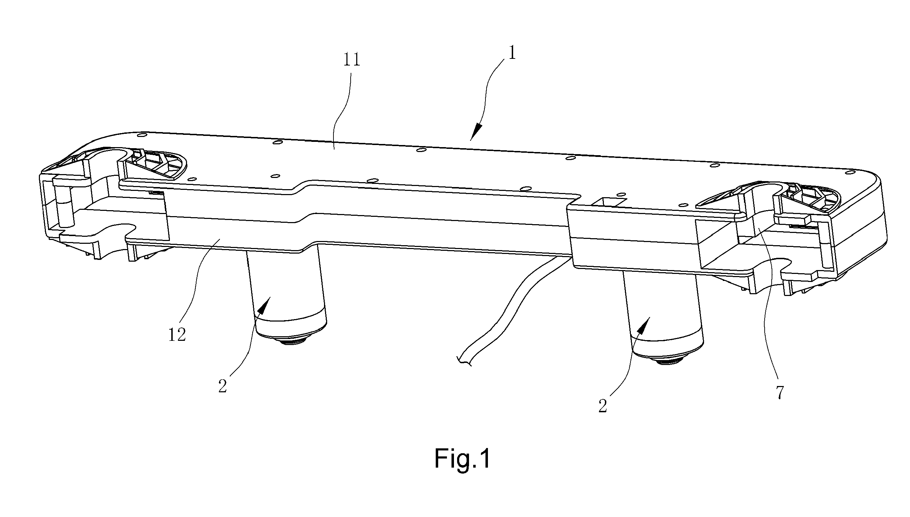

FIGS.1∼5 show an embodiment of the present invention.

In this embodiment, there are two electric linear actuators, and can separately push two rockers 10 on the supporting device of the bedstead. Each electric linear actuator comprises a housing 1 and a reversible electromotor 2, a worm set on the output shaft of the electromotor 2, a worm gear 4, a screw 5, a circuit board 8 to control the electromotor 2 which all set in the housing 1.

In order to make the assembling easy, the housing 1 is composed with an upper-housing 11 and a lower-housing 12. The electromotor 2 is set at the bottom of the lower-housing 12, and the output shaft of the electromotor 2 goes through the lower-housing 12 and enters into the housing 1.

The center shaft of the worm gear 4 is relatively vertical to the worm 3, and the worm gear 4 goes into mesh with the worm 3. Furthermore, the worm gear 4 has a left bearing 42 and a right bearing 43 on its two sides, and the housing 1 has a left groove 14 and a right groove 15 to separately contain the left bearing 42 and the right bearing 43. It is to make the worm gear 4 can only rotate freely in the housing 1 and cannot move relatively to the housing 1.

The screw 5 goes through the center shaft of the worm gear 4 and goes into mesh with the center hole 41 of the worm gear 4. Furthermore, the screw 5 has a limiting block 6 and a pushing block 7 separately on its two ends, and the limiting block 6 fixes on the inside end of the screw via a nut, while the pushing block 7 directly fixes on the outside end of the screw 5.

In the meanwhile, the lower-housing 12 of the housing 1 has a sliding groove 13 which matches to the limiting block 6, and the limiting block 6 can glide along the sliding groove 13, so the screw 5 can move linearly and limitedly along the sliding groove 13 in the housing 1 with the limiting block 6 and the pushing block 7.

At the same time, a stop-falling touching switch 91 and a stop-rising touching switch 92 are separately set alongside the sliding groove 13 of the housing 1, and the stop-falling touching switch 91 and the stop-rising touching switch 92 can separately touch the limiting block 6 when the limiting block 6 glides. Moreover, the stop-falling touching switch 91 and the stop-rising touching switch 92, as the switches in mechanism-type, all connect to the circuit board 8 and can control the electromotor 2 to stop working.

In this embodiment, the screw 5 and the worm gear 4 are made of metal, and the pushing block 7 is made of engineering plastic.

The working procedure of the electric linear actuator is as below:

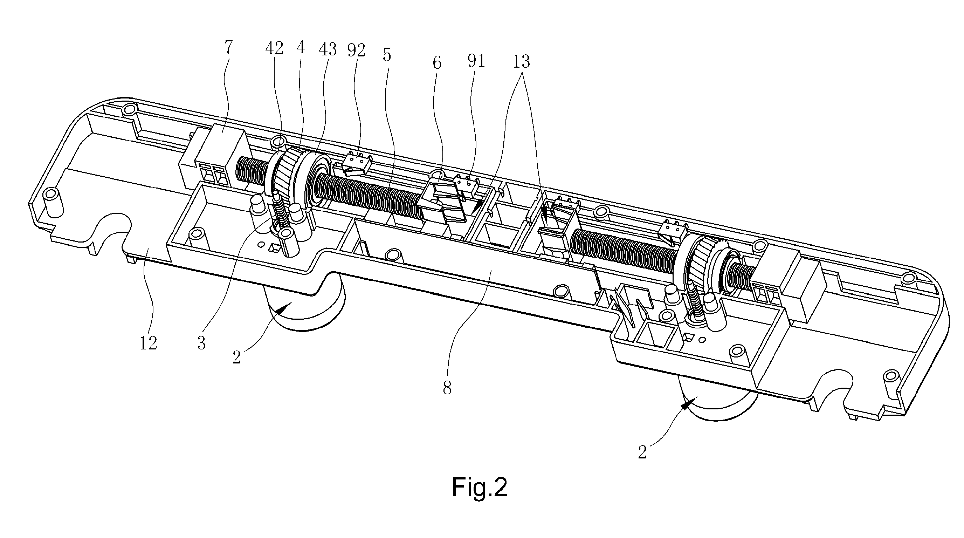

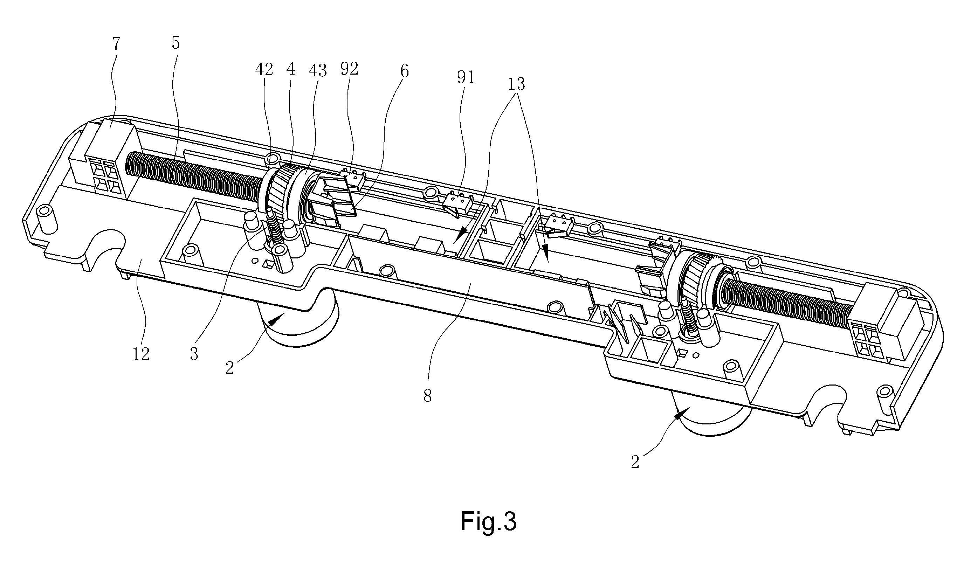

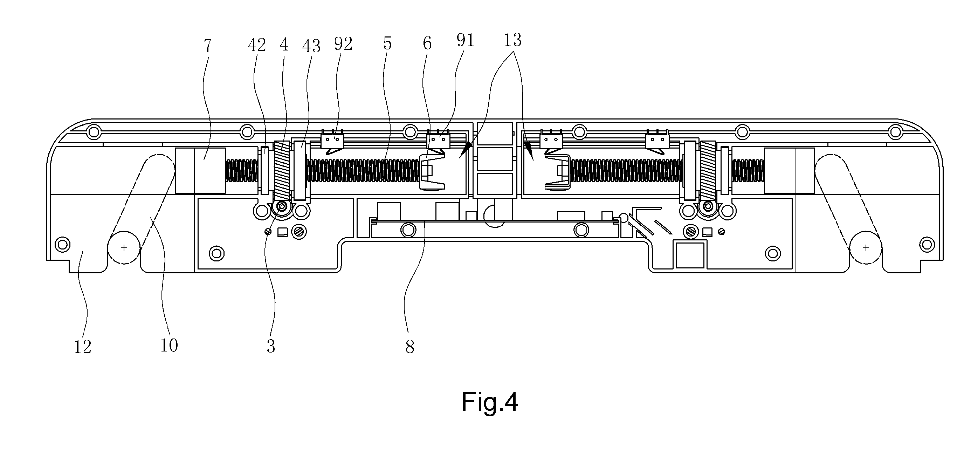

Before the electric linear actuator pushes, the limiting block 6 on the inside end of the screw 5 just touches the stop-falling touching switch 91 and is at the falling down limited position, as shown in FIG.2. When the end of the bedstead needs to be risen, the circuit board 8 will make the electromotor 2 start to work, then the worm 3 will drive the worm gear 4 to rotate relatively to the housing 1, and the screw 5 will move together with the limiting block 6 and the pushing block 7 to outside along the sliding groove 13 of the housing 1 driven by the worm gear 4. Then the pushing block 7 will push the rocker 10 on the supporting device of the bedstead, and the rocker 10 will drive the supporting shaft which is embedded in the groove of the housing 1, then the bedstead rises up. The rocker 10 and the supporting shaft are drawn as the components in dashed in FIG.4. When the screw 5 moves to the rising up limited position, the limiting block 6 on its inside end just touches the stop-rising touching switch 92 and makes the electromotor 2 stop working, as shown in FIG.3. When the end of the bedstead needs to be fallen down, the circuit board 8 will make the electromotor 2 start to work in reversal, and the screw 5 will move back along the sliding groove 13 together with the pushing block 7 and the limiting block 6. When the limiting block 6 touches the stop-falling touching switch 91, the electromotor 2 will stop working, and then the screw 5 will return to the falling down limited position again.

In the procedure of the actual application, the electric linear actuator will stop working when the screw 5 moves to the rising up limited position or falling down limited position, the user can also make the screw 5 move to any position between the rising up limited position and falling down limited position via the circuit board 8, to adjust the height of the rising or falling of the bedstead according to actual need.

## Claims

1. An electric linear actuator, comprising a housing (1) and the components which are set in the housing (1) list as below:
a reversible electromotor (2);
a worm (3) which can rotate driven by the output shaft of the electromotor (2);
a worm gear (4), which is engaged with the worm (3), and which can only rotate freely in the housing (1);
a screw (5), who has a limiting block (6) and a pushing block (7) separately on its two ends, and who goes through the center shaft of the worm gear (4) and goes into mesh with the center hole (41) of the worm gear (4);
wherein the housing (1) has a sliding groove (13) in which the limiting block (6) can glide along.

2. The electric linear actuator of claim 1, wherein the manner of the worm gear (4) which can only rotate freely in the housing (1) is as follows: the worm gear (4) has a left bearing (42) and a right bearing (43) on its two sides, and the housing (1) has a left groove (14) and a right groove (15) to separately contain the left bearing (42) and the right bearing (43).

3. The electric linear actuator of claim 1 or claim 2, wherein the housing (1) has a switch or switches which can control the electromotor (2) to stop working.

4. The electric linear actuator of claim 3, wherein the switches are the stop-falling touching switch (91) and stop-rising touching switch (92) which are separately set alongside the sliding groove (13) of the housing (1) and can separately touch the limiting block (6).

5. The electric linear actuator of claim 4, wherein the housing (1) further has a circuit board (8) which can control the electromotor (2) to work, and the stop-rising touching switch (92) and the stop-falling touching switch (91) connect to the circuit board (8).
